**Europäisches Patentamt**

**European Patent Office**

**Office européen des brevets**

(19)

(11) Veröffentlichungsnummer: **0 044 908**
**B1**

(12) **EUROPÄISCHE PATENTSCHRIFT**

(45) Veröffentlichungstag der Patentschrift:
20.03.85

(51) Int. Cl.⁴: **F 16 F 1/38**, B 60 K 5/12,
B 60 G 7/00, F 16 F 15/08

(21) Anmeldenummer: **81102549.3**

(22) Anmeldetag: **04.04.81**

(54) **Axial belastbare Hülsengummifeder.**

(30) Priorität: **29.07.80 DE 3028631**

(43) Veröffentlichungstag der Anmeldung:
**03.02.82 Patentblatt 82/5**

(45) Bekanntmachung des Hinweises auf die Patenterteilung:
**20.03.85 Patentblatt 85/12**

(84) Benannte Vertragsstaaten:
**BE FR GB IT NL SE**

(56) Entgegenhaltungen:
**EP - A - 0 005 730**
**EP - A - 0 009 120**
**DE - A - 2 410 813**
**DE - A - 2 932 131**
**FR - A - 926 845**
**FR - A - 933 704**
**FR - A - 2 255 508**
**US - A - 2 432 050**
**US - A - 2 562 195**
**US - A - 2 582 998**
**US - A - 4 032 126**

(73) Patentinhaber: **Boge GmbH, Bogestrasse 50,
D-5208 Eitorf/Sieg (DE)**

(72) Erfinder: **Honcamp, Günther, Dipl.-Ing.,
Schützenstrasse 126, D-5483 Bad Neuenahr-Ahrweiler
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung bezieht sich auf eine axial belastbare Hülsengummifeder zur elastischen Lagerung von Maschinen oder Maschinenteilen, bestehend aus einer glatten Innenhülse, einer dieselbe unter Bildung eines Zwischenraumes umschliessenden Aussenhülse sowie zwei in den Zwischenraum eingesetzten, ringförmigen Gummifedern, die mit der Innenhülse fest verbunden sind, wobei die Gummifeder einen umlaufenden und mit Dämpfungsflüssigkeit gefüllten Ringraum aufweist, der durch einen ringförmigen Trennkörper in zwei über einen umlaufenden Drosselspalt miteinander in Verbindung stehende Ringkammern unterteilt ist.

Beispielsweise bei mit Federbeinen abgestützten Kraftfahrzeugachsen wurde beobachtet, dass insbesondere die Vorderachsen in einem Geschwindigkeitsbereich von 80 bis 120 km/h stark schütteln, was u.a. aus der unvermeidlichen Unwucht der Vorderreifen herrührt. Durch entsprechend weiche Ausbildung der Bremszug- oder Druckstrebenlager konnte keine Abhilfe geschaffen werden. Auch Gummimischungen mit erhöhter Dämpfung wurden eingesetzt. Durch diese Massnahmen konnte das auftretende Schütteln jedoch immer noch nicht vollständig vermieden werden.

Es sind elastische Lagerungen bekannt (z. B. US-A-2 432 050), bei denen die Gummifeder einen Ringraum bildet. Hierbei ist von Nachteil, dass das Aussenteil nahe seinen Stirnflächen von innen eingearbeitete, umlaufende Rillen aufweist, in die Gummifedern unter Verformung eingeklemmt sind. Ein derartiges Aussenteil ist in der Herstellung aufwendig und lässt sich im Fahrzeug oder in Maschinenteilen nur sehr schwer einbauen, da es einer speziellen Anpassung der aufnehmenden Teile bedarf. Darüber hinaus wird beim Einklemmen der Gummifedern in das Aussenteil eine Kerbwirkung erzeugt, die nicht nur zu einer raschen Zerstörung der Gummifedern führen kann, sondern auch die axiale Belastung der Vorrichtung beeinträchtigt. Torsions- und Verkantungsbeanspruchungen vermindern die Lebensdauer nochmals.

Der vorliegenden Erfindung liegt die Aufgabe zugrunde, eine Hülsengummifeder zu schaffen, die einerseits Torsions- und Verkantungsbeanspruchungen aufnehmen kann und die neben einer axial elastischen federnden Lagerung zur Vermeidung von Resonanzschwingungen mit grossen Amplituden noch eine zusätzliche integrierte hydraulische Dämpfung zum Auffangen von axial eingeleiteten Stössen vorsieht und die andererseits aus einfachen Bauteilen herzustellen und problemlos zu montieren ist.

Diese Aufgabe wird bei einer Hülsengummifeder der eingangs erwähnten Gattung erfindungsgemäss dadurch gelöst, dass die Gummifedern jeweils mit ihrem inneren und äusseren Umfang durch Vulkanisation oder Klebung in hülsenförmigen Körpern aufgenommen und zusammen mit den hülsenförmigen Körpern durch Reibschluss axial in der glatten Innen- und Aussenhülse fixiert ist.

Durch die Erfindung wird mit einfachen Mitteln bei einer Hülsengummifeder die Möglichkeit einer wesentlich verbesserten Dämpfung von auftretenden Schwingungen der mit der Hülsengummifeder abgestützten Konstruktionsteile geschaffen. Durch die im wesentlichen glatte und rotationssymmetrische Ausbildung ist eine einfache kostengünstige Herstellung gewährleistet. Darüber hinaus lassen sich solche einfachen Bauteile ohne grossen Aufwand herstellen und zu einer Hülsengummifeder zusammenfügen und ohne besondere Halterungen in Fahrzeugen oder Maschinenteilen einbauen.

Im Hinblick darauf, dass die erfindungsgemässe Vorrichtung auf einfache Weise an die unterschiedlichsten Dämpfungsaufgaben gut angepasst werden kann, ist sie mit Vorteil in vielen verschiedenen Anwendungsfällen verwendbar: beispielsweise in Zug- oder Druckstreben, Schaltgestängen, Spurstangen von Kraftfahrzeugen (jeweils zur Verhinderung von Nachschwingungen bei eingeleiteten Stössen oder Reifenunwucht), als Motor-, Getriebe- oder Zwischengetriebelagerung bei Kraftfahrzeugen sowie auch als Motor- oder Kompressorlagerung bei stationären Anlagen (zur Verhinderung grosser Amplituden beim Durchfahren der kritischen Drehzahlen oder in der Nähe der Resonanzfrequenz).

Die Erfindung wird nachstehend anhand eines in der Zeichnung schematisch dargestellten Ausführungsbeispieles näher erläutert. Es zeigt:

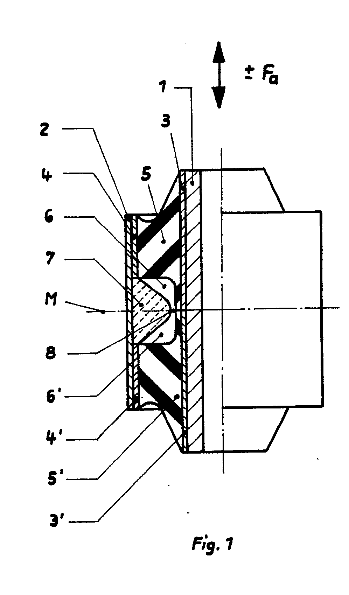

Figur 1 im teilweisen axialen Längsschnitt eine Ausführungsform der Hülsengummifeder nach der Erfindung.

Bei der Ausführungsform gemäss Figur 1 sind mit 1 und 2 zwei koaxiale starre innere bzw. äussere axial durchlaufende hülsenförmige Körper bezeichnet. 3, 3', 4, 4' sind starre innere bzw. äussere hülsenförmige Körper, die auf geeignete Weise mit zwei dazwischen befindlichen gummielastischen Körpern oder Gummifedern 5, 5' verbunden sind. Die gummielastischen Körper 5, 5' sowie die zugehörigen hülsenförmigen Körper 4, 4' sind derart ausgebildet, dass sie zwischen sich einen Hohlraum bilden, welcher durch einen im Querschnitt im wesentlichen dreieckigen, zu einer radialen Mittelebene M symmetrischen Trennkörper 7 in zwei Kammern 6, 6' aufgeteilt ist. Die beiden Kammern 6, 6' stehen durch eine Drosselöffnung 8 miteinander in Verbindung, die einerseits durch den aus Kunststoff bestehenden Trennkörper 7 und andererseits durch die benachbarte innere Wandung des Hohlraums begrenzt ist. Hierbei sind die aneinander anstossenden, nach innen gerichteten Enden der inneren hülsenförmigen Körper 3, 3' mit einer dünnen Gummischicht versehen, um Geräusche und Verschleiss zu vermeiden.

Der durch die Kammern 6, 6' gebildete umlaufende Hohlraum ist mit einem geeigneten beispielsweise flüssigen Dämpfungsmedium gefüllt, welches zumindest teilweise durch die Drosselöffnung 8 von der einen Kammer 6 in die andere Kammer 6' oder umgekehrt gedrückt wird. Bei der dabei auftretenden Drosselung des Dämpfungsmediums tritt die erwünschte Dämpfung auf.

Die Montage der Hülsengummifeder nach Figur 1 kann beispielsweise folgendermassen erfolgen: die gummielastischen Körper 5, 5' nebst daran angebrachten inneren und äusseren hülsenförmigen Körpern 3, 3' und 4, 4' mit eingelegtem Trennkörper 7 werden auf den weiteren inneren hülsenförmigen Körper 1 gepresst. Diese Einheit wird «unter Wasser» in den weiteren äusseren hülsenförmigen Körper 2, der einen etwas grösseren Innendurchmesser hat als der Aussendurchmesser der äusseren hülsenförmigen Körper 4, 4', gesteckt und die sich ergebende Gesamteinheit wird auf den endgültigen Aussendurchmesser reduziert. Dadurch ergibt sich nicht nur die notwendige Festigkeit der Gesamteinheit, sondern auch noch die erforderliche Dichtheit sowie die zur Erzielung der notwendigen Dauerhaltbarkeit erforderliche radiale Druckvorspannung in den gummielastischen Körpern 5, 5'.

Eine derartige Hülsengummifeder kann im übrigen praktisch auf gleiche Weise wie die bekannten Hülsengummifedern auch die auftretenden Torsions- und Verkantungsbeanspruchungen (kardanisch) gut aufnehmen. Die Wirkungsweise bei beidseitiger axialer Stossbelastung $\pm F_a$ wurde bereits weiter oben erläutert.

## Patentanspruch

1. Axial belastbare Hülsengummifeder zur elastischen Lagerung von Maschinen oder Maschinenteilen, bestehend aus einer glatten Innenhülse (1), einer dieselbe unter Bildung eines Zwischenraumes umschliessenden Aussenhülse (2) sowie zwei in den Zwischenraum eingesetzten, ringförmigen Gummifedern (5, 5') die mit der Innenhülse fest verbunden sind, wobei die Gummifedern einen umlaufenden und mit Dämpfungsflüssigkeit gefüllten Ringraum bilden, der durch einen ringförmigen Trennkörper (7) zwei über einen umlaufenden Drosselspalt miteinander in Verbindung stehende Ringkammern (6, 6') aufweist, dadurch gekennzeichnet, dass die Gummifedern (5, 5') jeweils mit ihrem inneren und äusseren Umfang durch Vulkanisation oder Klebung in hülsenförmigen Körpern (3, 3', 4, 4') aufgenommen und zusammen mit den hülsenförmigen Körpern (3, 3', 4, 4') durch Reibschluss axial in der glatten Innen- (1) und Aussenhülse (2) fixiert sind.

## Claim

1. Axially loaded elastic rubber sleeve for the resilient mounting of machines or machine components, comprising a smooth inner sleeve (1), an outer sleeve (2) surrounding it to define an intermediate space and two annular rubber springs (5, 5') inserted into the intermediate space and fixed to the inner sleeve, the rubber springs defining a circumferentially extending annular space filled with damping fluid and forming, by virtue of an annular dividing body (7) two annular chambers (6, 6') communicating with one another through a circumferentially extending restricted gap, characterised in that, the rubber springs (5, 5') are each received with their inner and outer peripheries secured by vulcanisation or adhesion in sleeve-shaped bodies (3, 3', 4, 4') and, together with the sleeve-shaped bodies (3, 3', 4, 4'), are located by friction axially in the smooth inner (1) and outer (2) sleeve.

## Revendication

Ressort en caoutchouc du type manchon, pouvant être sollicité axialement, destiné à assurer le support élastique des machines ou éléments de machines, composé d'un manchon intérieur lisse (1), d'un manchon extérieur (2) qui entoure le premier en formant un espace intercalaire, ainsi que deux ressorts en caoutchouc annulaires (5, 5') montés dans l'espace intercalaire, et qui sont réunis rigidement au manchon intérieur, les ressorts en caoutchouc formant une cavité annulaire périphérique remplie d'un liquide d'amortissement, qui présente, en raison de la présence d'un séparateur annulaire (7) deux chambres annulaires (6, 6') qui communiquent entre elles par l'intermédiaire d'une fente de laminage périphérique, caractérisé en ce que les ressorts en caoutchouc (5, 5') sont montés dans des corps (3, 3', 4, 4') en forme de manchon, par vulcanisation ou collage au niveau de leur périphérie intérieure ou extérieure respectivement et sont fixés axialement dans le manchon intérieur lisse (1) et dans le manchon extérieur lisse (2) par des liaisons opérant par frottement, conjointement avec les corps (3, 3', 4, 4') en forme de manchon.

Fig. 1